# EUROPÄISCHE PATENTSCHRIFT

(11) **EP 2 274 644 B1**
(45) Veröffentlichungstag und Bekanntmachung des Hinweises auf die Patenterteilung: **01.04.2015**
(21) Anmeldenummer: 09742005.3
(22) Anmeldetag: 28.04.2009
(51) Int. Cl.: G02B 6/38, H01R 13/627, H01R 13/633

(54) **OPTISCHER STECKVERBINDER MIT ENTRIEGELUNG**
OPTICAL PLUG CONNECTOR HAVING UNLOCKING MECHANISM
CONNECTEUR OPTIQUE ENFICHABLE À FONCTION DE DÉVERROUILLAGE

(30) Priorität: 07.05.2008 CH 707082008
(43) Veröffentlichungstag der Anmeldung: 19.01.2011
(60) Teilanmeldung: 13180091.4
(73) Patentinhaber: Huber+Suhner AG, 9100 Herisau (CH)
(72) Erfinder: ZAINA, Patrick, CH-9524 Zuzwil (CH); PETERHANS, Adrian, CH-9402 Moerschwil (CH); SCOPIC, Nesa, CH-9100 Herisau (CH)
(74) Vertreter: Rentsch Partner AG
(86) Internationale Anmeldenummer: PCT/EP2009/055161
(87) Internationale Veröffentlichungsnummer: WO 2009/135787

(56) Entgegenhaltungen:
- EP-A1- 2 063 497
- JP-A- 63 184 271
- US-A1- 2003 220 008
- US-A1- 2004 247 252
- US-A1- 2006 089 039
- US-B1- 7 326 075

## Beschreibung

Die Erfindung liegt auf dem Gebiet der Steckverbinder, insbesondere Steckverbinder für optische Kabel.

Aus dem Stand der Technik sind Steckverbinder für optische Kabel bekannt. Ebenfalls bekannt sind so genannte LC-Verbinder. Es handelt sich dabei im weiteren Sinn um Push-Pull-Verbinder, die eine hohe Packungsdichte aufweisen. Entsprechende Verbinder werden von der Anmelderin hergestellt, sind aber auch von diversen anderen Herstellern bekannt.

Die europäischen Patente EP 0 762 558 B1 (EP558) und EP 0 768 547 B1 (EP547) beschreiben einen optischen Steckverbinder. Der Steckverbinder weist einen Grundkörper zur Aufnahme des optischen Leiters auf. An die Aussenseite des Steckverbinder ist ei n elastisch federnd ausgebildetes Auslegerbauglied (auch als Pastverriegelungsglied oder Verriegelungsglied bezeichnet) mit Verriegelungsschultern angeformt, dessen freies Ende gegen das hintere Ende des Steckverbinder gerichtet ist. An der Aussenseite des Steckverbinder ist weiter ein Flansch bzw. Auslöser angeformt, dessen freies Ende schräg nach oben abstehend gegen das vordere Ende des Steckverbinders zeigt und mit dem freien Ende des Verriegelungsglieds wechselwirkt. Wenn das freie Ende des ortsfest angeordneten Auslösers elastisch federnd niedergedrückt wird, wird das freie Ende des Verriegelungsglieds gegen die zentrale Achse gedrückt und der Steckverbinder kann durch ein nach hinten Zehen am Grundkörper aus der Buchse gezogen werden, wenn bzw. solange der Auslöser hierbei gleichzeitig niedergedrückt wird. Ein Nachteil besteht in der ungünstigen Führung der Kräfte: Da für das Niederdrücken des Auslösers eine nach vorne gerichtete, aber für die Entnahme des Verbindersauseiner Buchse eine nach hinten gerichtete Kraft erforderlich ist, lässt sich der Verbinder nur vergleichsweise schwierig entriegeln.

Das europäische Patent EP 1 091 227 B1 (EP227) offenbart eine weitere Ausführungsvariante eines Steckverbinder mit einem fix positionierten Auslöser. Am Grundkörper ist ein Verriegelungsglied angeformt. Der Steckverbinder umfasst weiter ein manschettenartiges Verstärkungselement (als Joch bezeichnet) mit quadratischem Querschnitt, welches einen Teilbereich des Grundkörpers senkrecht zur zentralen Achse des Steckverbinder vollständig umschliesst. Am Verstärkungselement ist weiter ein elastisch federnd ausgebildeter Auslöser angeformt, dessen freies Ende - analog wie bei EP588 und EP547- mit dem freien Ende des am Grundkörper angeformten Verriegelungsglieds zusammen wirkt. Bei der Herstellung bzw. dem Zusammenbau des Steckverbinders wird das Verstärkungselement entlang der zentralen Achse auf den Grundkörper geschoben und in einer definierten Position fixiert. Wie bei EP588 und EP547 kann der Steckverbinder aus der Buchse gezogen werden, wenn der Auslöser auf das Verriegelungsglied niedergedrückt und gleichzeitig der Steckverbinder bzw. Grundkörper nach hinten gezogen wird.

Das US-Patent US6,565,262 B2 zeigt eine weitere Aufführungsvariante eines Steckverbinders mit einem fix positionierten Auslöser. Wie bei EP277 ist an einem Grundkörper des Steckverbinders ein schräg nach hinten abstehendes Verriegelungsglied angeformt, welches ebenfalls durch einen Auslöser betätigt werden kann. Der Auslöser ist an einer in axialer Richtung fix angeordneten Schutzmanschette mit im Wesentlichen C-förmigem Querschnitt angeformt. Die Schutzmanschette kann sowohl in einer von der zentralen Achse abweichenden Richtung auf den Grundkörper oder den Leiter aufgeschnappt werden wie auch in Richtung der zentralen Achse gegen und auf den Grundkörper geschoben werden. In der bestimmungsgemässen Funktionsposition ist die Schutzmanschette fix am Grundkörper befestigt bzw. positioniert; Vorsprünge der Schutzmanschette greifen in korrespondiere Aussparungen des Grundkörpers. Der Steckverbinder kann aus der Buchse entfernt werden, wenn-wie beim vorangehenden Stand der Technik - der Auslöser nach unten gedrückt und der Steckverbinder gleichzeitig nach hinten gezogen wird. Hierbei erfolgt keine Verschiebung der Schutzmanschette auf bzw. gegenüber dem Grundkörper.

In der US-Patentanmeldung US2004/ 0247252 A1 (US252) ist ein Steckverbinder offenbart, welcher aus einem Grundkörper und einem Entriegelungselement besteht. Der Gundkörper und das Entriegelungselement werden formschlüssig aneinander gekoppelt und sind derart ausgebildet, dass in Richtung der zentralen Achse ein optischer Leiter aufgenommen werden kann. Über ein Scharnier ist auf der Aussenseite des Grundkörper ein schräg nach hinten abstehendes Verriegelungsglied angebracht. Der Grundkörper weist seitlich weiter eine durchgehende Ausnehmung auf, welche mit einer Zunge des Entriegelungselements wechselwirkt und den Hub der Verschiebung zwischen dem Qundkörper und dem Entriegelungselement entlang der zentralen Achse bestimmt. Das Entriegelungselement umfasst einen von der zentralen Achse abstehenden, formfesten Aufbau mit einem Schacht, welcher das freie Ende des Verriegelungsglieds aufnimmt. Beim nach hinten Zehen des Entriegelungselements entlang der zentralen Achse wird das Verriegelungsglied gegen den Grundkörper gedrückt und hierbei der Steckverbinder entriegelt, so dass der Steckverbinder aus der Buchse gezogen werden kann. Im Vergleich zum vorangehend gewürdigten Stand der Technik muss hier der Auslöser während dem nach hinten Ziehen nicht niedergedrückt gehalten werden während das Entriegelungselement - und nicht das Grundgehäuse -nach hinten gezogen wird. En Nachteil besteht darin, dass das Entriegelungselement einen sehr komplizierten Aufbau aufweist.

Die US-Patente US 6,752,538 B1, US 6,821,024 B2 und US7,052,186 B1 zeigen jeweils einen Steckverbinder oder ein Paar gekoppelter Steckverbinder mit einer Vorrichtung, welche ein ungewolltes Entriegeln verhindern sollen. Um ein ungewolltes Entriegeln des Verriegelungsglied zu verhindern, ist auf dem Grundkörper eine in Richtung der zentralen Achse verschiebbare Scherheitsmanschette angebracht. Mit dem hinteren Ende des Betätigungselements kann die Sicherheitsmanschette einerseits nach vorne geschoben werden, so dass das vordere Ende des Betätigungselements unter das Verriegelungsglied greift, dieses hier-mit nach oben drückt und zusätzlich arretiert, d.h. gegen ein unbeabsichtigtes Lösen schützt. Wird die Sicherheitsmanschette nach hinten geschoben, liegt das vordere Ende des Betätigungselements nicht mehr unter dem Verriegelungsglied, welches somit zum Entriegeln des Verbinders wie gewohnt nach unten gedrückt werden kann.

Aus US 5,984,531 ist eine optischer Verbinder bekannt, der eine integrierte Abdeckung aufweist, welche beim Einstecken des Verbinders selbsttätig öffnet und beim Ausstecken wieder verschliesst. Ein am hinteren Ende des Gehäuses angebrachter und nach schräg vorne abstehender Arm dient als Verriegelungsglied. Ein von hinten bis zu einem Anschlag in das Gehäuse eingepresste Hülse mit einem angeformten Crimphals schliesst den Verbinder nach hinten ab. Die Hülse dient gleichzeitig als Widerlager zur Abstützung einer im Innern angeordneten Feder welche zwischen der Hülse und einem Ferrulenhalter eingespannt ist und diese aktiv nach vorne drückt.

US6,206,581 ist auf einen optischen Verbinder mit einem einteilig ausgebildeten Gehäuse gerichtet. Ein Verriegelungsglied ist im vorderen Bereich des Gehäuses an einer Seitenwand angeformt und steht nach schräg hinten oben ab. Es ist federnd ausgebildet und kann in seinem hinteren Bereich zur Entriegelung elastisch gegen die Seitenwand des Gehäuses gedrückt werden. Um das Gehäuse zu verschliessen wird von hinten eine mit seitlich abstehenden Verriegelungselementen versehene Hülse in eine Längsöffnung des Gehäuses eingesetzt bis die Verriegelungselemente der Hülse in entsprechend vorgesehenen seitlichen Öffnungen des Gehäuses einrasten. Der Querschnitt der Längsöffnung ist zumindest am hinteren Ende rechteckig oder polygonal ausgestaltet. Das Gehäuse weist im hinteren Bereich in Längsrichtung verlaufende Schlitze auf, die ein nach aussen Biegen der Gehäuseseiten beim Enrasten der Verriegelungselemente ermöglichen. Der Querschnitt der Hülse ist so ausgestaltet, dass die Hülse im eingerasteten Zustand aufgrund ihrer formschlüssigen Ausgestaltung nicht um ihre Längsachse drehen kann. Ein von hinten auf das Verbindergehäuse aufgestecktes Entriegelungselement weist eine nach schräg vorne und oben abstehende Entriegelungslasche auf, die nach vorne unten auf das hintere Ende des Verriegelungselementes gedrückt werden kann, so dass dieses entriegelt. Je nach Ausgestaltung kann so mehr als ein Verbinder gleichzeitig entriegelt werden. Weitere Verbinder ähnlicher Natur sind aus US 5,481,634, respektive US 5,579,425 bekannt. Die Gehäuse dieser Verbinder werden am hinteren Ende durch einen entsprechend ausgestalteten durch Spritzgiessen hergesellten Deckel verschlossen.

En Nachteil der aus dem Stand der Technik bekannten Lösungen besteht in der ungünstigen Führung der Kräfte beim Entriegeln, beziehungsweise dem komplizierten Aufbau. Viele der bekannten Verbindern erfordern dass beim Lösen von der Buchse zwei Bewegungen-das nach unten Drücken des Auslösers und das nach hinten Zehen des Steckverbinders-annähernd synchron erfolgen müssen. Andere Steckverbinder zeichnen sich durch einen komplizierten Aufbau auf, der sich nachteilig auf die Herstellkosten niederschlägt.

Eine Aufgabe der Erfindung besteht darin, die Nachteile der aus dem Stand der Technik bekannten Verbinder zu überwinden. Eine weitere Aufgabe der Erfindung besteht darin, einen optischen Verbinder zu zeigen, der sich durch eine vereinfachte Bedienbarkeit auszeichnet.

Die Aufgabe wird durch den in den unabhängigen Patentansprüchen definierten Verbinder gelöst.

Im Unterschied zu den aus dem Sand der Technik bekannten Verbindern weist ein erfindungsgemässer Verbinder einen einfach herzustellenden Aufbau auf. Ausserdem werden die für die Entriegelung und die Entnahme notwendigen Kräfte so aufeinander abgestimmt, dass die Bedienung merklich erleichtert wird.

Weitere Vorteile bestehen in der im Vergleich zu den aus dem Stand der Technik bekannten Verbindern höherer Packungsdichte, welche sich vorteilhaft auf die Anordnung auswirkt. Es können mehrere Verbinder, resp. Verbi nderpaare auf engeren Raum übereinander und/ oder nebeneinander angeordnet werden. Die Verbinder weisen eine geringere Bauhöhe auf. Andererseits ist die Entriegelung bei hohen Packungsdichten dennoch unproblematisch, da es nicht erforderlich ist den Entriegelungshebel wie üblich von oben her nach unten zu drücken. Einfach gesagt, sind die Finger bei m Entriegeln ausserhalb des Bereichs der Verriegelungsarme.

Verbinder der gattungsgemässen Art weisen einen weitgehend normierten Aufbau mit einem ein-oder mehrteiligen Grundkörper und einem daran angebrachten nach schräg hinten abstehenden Verriegelungsarm auf. Die Verbinder sind derart ausgestaltet, dass sie in dafür vorgesehene Buchsen eingeklinkt werden können. Seitlich am Verriegelungsarm vorstehende Verriegelungsschultern werden dabei in einen Hintergriff der Buchse eingeschnappt und verhindern damit ein ungewolltes Herausrutschen des Verbinders aus der Buchse. Der Verriegelungsarm kann zum Entriegeln gegen den Grundkörper gedrückt werden, derart, dass die Verriegelungsschultern aus dem Hintergriff bewegt werden und so den Verbinder zur Entnahme aus der Buchse freigeben. Der Qundkörper weist eine durchgehende Öffnung auf, in der eine optische Faser angeordnet ist. Am vorderen Ende mündet die optische Faser in eine in Längsrichtung federnd gelagerte Ferrule, üblicher Weise aus Keramik Am hinteren Ende weisen die Verbinder in der Regel einen Orimphals auf, der zum Anschluss eines Kabelmantels des optischen Kabels dient. Im Innern des Verbinders ist in der Regel eine Feder angeordnet, welche gegen einen im Bereich des hinteren Endes der Ferrule angebrachten Bocks drückt. Die Gehäuse der Verbinder werden typischer Weise aus spritzgegossenem Kunststoff hergestellt.

Bei den aus dem Stand der Technik bekannten Verbindern muss in der Regel zum Entriegeln ein Bügel nach vorne unten gedrückt werden, bevor der Verbinder in entgegen gesetzter Richtung nach hinten aus einer Buchse entnommen werden kann. Diese Kräfteverhältnisse sind ungünstig, da während dem eine Kraft nach vorne unten, eine grössere Gegenkraft nach hinten überlagert werden mussum den Verbinder zu entriegeln und zu entnehmen.

Bei einer beispielhaften Ausführungsform eines optischen Steckverbinders wird dieser Nachteil vermieden, indem zum Entriegeln primär eine Kraft nach hinten -also in Entnahmerichtung -erforderlich ist. Durch diese vektorielle Gleichschaltung der Kräfte wird die Bedienung merklich vereinfacht. Konstruktiv wird dies erreicht, indem auf einem Grundkörper des Verbinders ein gegenüber diesem verschiebbares Entriegelungselement angeordnet ist, welches mit einem Verriegelungsarm wirkverbunden ist.

Das Entriegelungselement weist in der Regel ein Verschiebeelement auf, das Gegenüber dem Grundkörper verschiebbar ist. Ein am Verschiebeelement angeformter oder mit diesem wirkverbundener Bügel dient zur Transformation der Bewegung des Verschiebeelementes in eine Kraft, welche zum Entriegeln des Verriegelungsbügels dient. Der Bügel ist dabei derart ausgestaltet, respektive mit dem Verriegelungsarm wirkverbunden, dass der Verbinder problemlos in eine Buchse eingeschnappt werden kann, d.h. der Verriegelungsarm kann die für die Verriegelung notwendige Bewegung in Richtung des Grundkörper ohne grossen Aufwand und Behinderung ausführen.

Eine weitere beispielhafte Ausführungsform betrifft einen Steckverbinder mit einem Grundkörper und einem im Bereich des vorderen Endes des Grundkörpers angeformten, nach hinten schräg abstehenden, gelenkigen Verriegelungsarm. Ein manschettenartiges Verschiebeelement umgibt den hinteren Bereich des Grundkörpers zumindest bereichsweise und ist gegenüber diesem in Längsrichtung verschiebbar. Das Entriegelungselement ist mit dem \/erriegelungsarm über einen Bügel wirkverbunden. Durch Verschieben des Entriegelungselementes in eine Entriegelungsrichtung wird, der wirkverbundene Verriegelungsarm entriegelt. Je nach Ausgestaltung und Anwendungsgebiet können der Bügel und der Verriegelungsarm und/ oder der Bügel und das Verschiebeelement einteilig ausgebildet snd. Dünnstellen, zB. in Form von Filmscharnieren, garantieren dabei die erforderliche Beweglichkeit. Je nach Ausgestaltung kann das Verschiebeelement fest oder lösbar mit dem Grundkörper wirkverbunden sein. Bei einer lösbaren Ausgestaltung kann das Verschiebeelement einen C-oder U-förmigen Querschnitt aufweist, welcher den Grundkörper teilweise umschliesst. Das Verschiebeelement kann derart ausgestaltet sein, dass es auf einem oder mehrere Verbinder gleichzeitig aufgeschnappt werden kann. Bei einer nicht lösbaren Ausgestaltung kann das Verschiebeelement einen ringförmig geschlossenen Querschnitt aufweisen, welcher den Grundkörper umgibt.

Die Entriegelungskräfte, sowie die für die Entnahme aus der Buchse erforderlichen Entnahmekräfte werden normaler Weise vom Verschiebelement über den Bügel auf den Verriegelungsarm und von da auf den Grundkörper übertragen. Durch Zehen am Verschiebeelement wird zuerst der Verriegelungsarm entriegelt und dann der Qundkörper des Verbinders aus der Buchse gezogen. Bei Bedarf können das Verschiebeelement und/ oder der Qundkörper Mittel zur Begrenzung der Verschiebung, zB. in Form von mechanischen Anschlägen aufweisen.

Bei Bedarf weist der Seckverbinder Kopplungsmittel auf, die zum seitlichen Wirkverbinden mit einem weiteren Steckverbinder dienen. Je nach Anwendungsgebiet können die Kopplungsmittel am Grundkörper und/ oder dem Verschiebeelement angeordnet sein. In einer Ausführungsform handelt es sich bei den Kopplungsmitteln um vorstehende Zapfen und mit ihnen korrespondierend ausgebildete Vertiefungen, die ein gegenseitiges Verdrehen der Steckverbinder verhindern.

Die Kopplungsmittel können so ausgestaltet sein, dass durch sie zwei Verbinder fest miteinander verbunden werden können. Alternativ oder in Ergänzung kann eine Halteklammer (Verbinderklammer) vorgesehen werden, die zur Aufnahme von zwei oder mehreren Verbindern geeignet ist. Die Halteklammer kann zum gemeinsamen Entriegeln der Verbinder geeignet sein.

Wie schon oben erwähnt ist aus US2004/ 0247252 (US252) ein Verbinder mit einem sehr komplizierten Aufbau bekannt. Cbschon auch dieser Verbinder einen verschiebbaren Teil aufweist, kann er bezüglich dem Aufbau und der Funktionsweise nicht mit einem Verbinder gemäss der hier offenbarten Erfindung verglichen werden, der sich unter anderem wesentlich einfacher herstellen lässt. Der aus US252 bekannte Verbinder weist einen verschiebbaren Hinterteil auf, der den gesamten hinteren Bereich des Verbinders bildet. Der verschiebbare Teil wirkt je nach Ausführungsform mit dem Verriegelungsarm über eine oder mehrere kurze, steile im Innern des Gehäuses angeordnete Rampen zusammen. Die Rampen sind an einem starren, nicht deformierbaren Aufbau angeordnet. Durch Verschieben des Hinterteils gegenüber einem Vorderteil des Verbinders wird der Verriegelungsarm durch Rutschen entlang der Rampe nach unten gedrückt und der Verriegelungsarm dadurch entriegelt. Nachteile dieser Ausgestaltung sind neben der auftretenden, konstruktionsbedingten Gleitreibung, der komplizierte Aufbau, der sich negativ auf die Herstellkosten des Verbinders auswirkt. En weiterer Nachteil besteht darin, dass die Rampe aufgrund ihrer Ausgestaltung und Anordnung und Neigung ungünstige Kräfteverhältnisse ergibt. Ein weiterer Nachteil besteht darin, dass aufgrund der Ausgestaltung nicht klar definiert ist, wann der Verbinder entriegelt ist. Ausserdem ist nicht ersichtlich ob überhaupt durch ein Zehen am hinteren Teil der Verbinder nicht nur entriegelt, sondern auch entnommen werden kann. Diese Nachteile werden durch die erfindungsgemässen Verbinder vermieden.

Ein erfindungsgemäßer optischer Steckverbinder ist im Anspruch 1 angegeben. Die Ansprüche 2-11 betreffen vorteilhafte Ausgestaltungen des erfindungsgemäßen optischen Steckverbinders.

Die Erfindung soll anhand der in den nachfolgenden Figuren gezeigten Ausführungsbeispiele näher erläutert werden. Es zeigen
- Fig. 1: zwei Exemplare einer ersten Ausführungsform eines Steckverbinders in einer perspektivischen Darstellung von schräg vorne und oben;
- Fig. 2: zwei neben einander angeordnete Steckverbinder gemäss Figur 1 und eine Verbindeklammer in einer perspektivischen Ansicht von schräg vorne und oben;
- Fig. 3: die Seckverbinder gemäss Figur 2 mit wirkverbundener Verbindeklammer in einer perspektivischen Ansicht von schräg vorne und oben;
- Fig. 4: die Steckverbinder gemäss Figur 3 in einer Seitenansicht;
- Fig. 5: eine zweite Ausführungsform eines Steckverbinder in einer perspektivischen Ansicht von schräg hinten;
- Fig. 6: den Steckverbinder gemäss Figur 5 von der Seite;
- Fig. 7: den Steckverbinder gemäss Figur 5 von hinten;
- Fig. 8: zwei erfindungsgemässe Steckverbinder von schräg oben und miteinander wirkverbunden;
- Fig. 9: die beiden Steckverbinder gemäss Figur 8 in getrennter Darstellung und teilweise geschnitten;
- Fig. 10: einen Steckverbinder gemäss Figur 8 ohne Entriegelungselement;
- Fig. 11: einen Steckverbinder gemäss Figur 8 in einer Explosionsdarstellung;
- Fig. 12: ein Entriegelungselement für einen Verbinder und ein Entriegelungselement für zwei Verbinder;
- Fig. 13: die beiden Verbinder gemäss Figur 8 in einer Draufsicht;
- Fig. 14: eine Schnittdarstellung entlang der Schnittlinie AA gemäss Figur 13.

Sich entsprechende Elemente sind in den Figuren mit identischen Bezugszeichen versehen.

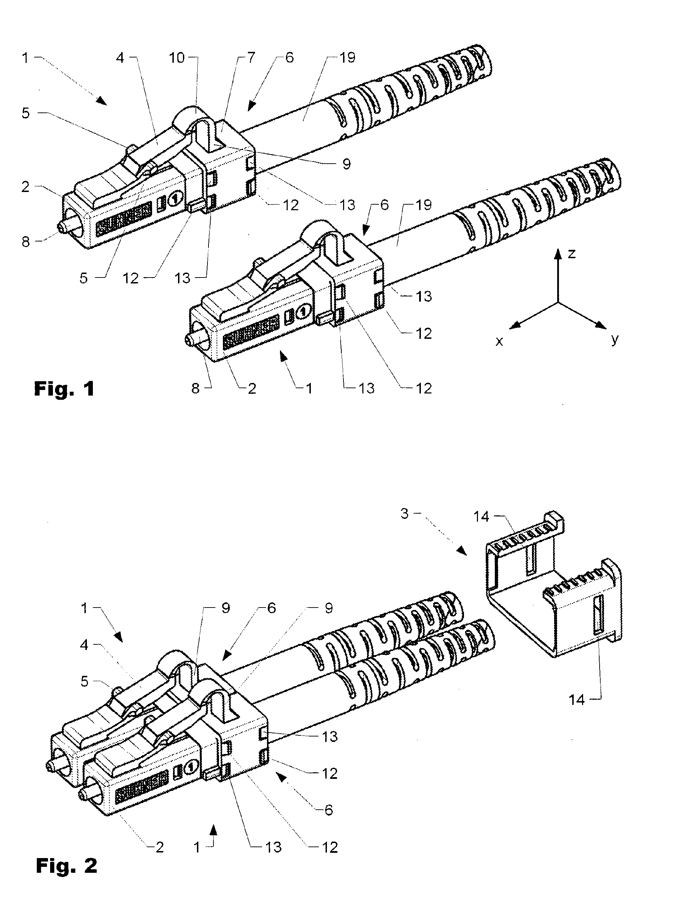

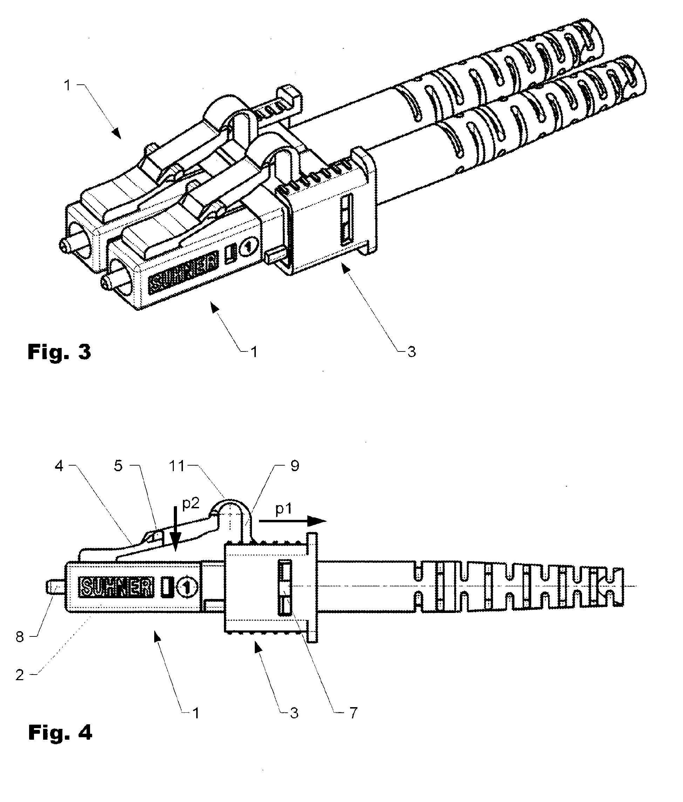

**Figur 1** zeigt zwei Verbinder 1 in einer ersten Ausführungsform seitlich neben einander. **Figur 2** zeigt die Verbinder 1 gemäss Figur 1 seitlich zusammengefügt, zusammen mit einer noch nicht wirkverbundenen Verbinderklammer 3. **Figur** 3 zeigt die beiden Verbinder 1 gemäss Figur 1 in einer perspektivischen Darstellung von schräg vorne und oben. Die Verbinder 1 sind seitlich nebeneinander und mittels der Verbinderklammer 3 wirkverbunden. **Figur 4** zeigt die Verbinder gemäss Figur 3 von der Seite.

Die Verbinder 1 weisen einen Grundkörper 2 und einen am vorderen Ende des Grundkörpers 1 schräg nach hinten elastisch federnd abstehenden Verriegelungsarm 4 auf. Am Verriegelungsarm 4 sind seitlich vorstehende Verriegelungsschultern 5 angeordnet die zum Einschnappen in entsprechende Ausnehmungen einer korrespondierend ausgebildeten Buchse (nicht dargestellt) dienen. Am vorderen Ende des Grundkörpers 2 ist eine Ferrule 8 zur Aufnahme und zum Verbinden eines optischen Leiters (nicht näher dargestellt) zu erkennen.

Ein Entriegelungselement 6 ist auf dem Qundkörper 2 angeordnet. Es weist eine Manschette (Verschiebelement) 7 auf, welche den Grundkörper 2 zumindest teilweise umgibt und gegenüber diesem in Längsrichtung (x-Richtung) verschiebbar ist. Das Entriegelungselement 6 ist in axialer Richtung vor einer Knickschutzhülle 19 angeordnet.

An der Manschette 7 ist ein Bügel 9 vorstehend angeordnet, der mit dem Verriegelungsarm 4 gelenkig wirkverbunden ist. In der gezeigten Ausführungsform ist die gelenkige Wirkverbindung durch eine oder mehrere Dünnstellen 10 gegeben. Je nach Ausführungsform kann der Bügel 9 elastisch federnd oder starr ausgebildet sein. Die Dünnstellen 10 können als Filmscharniere ausgebildet sein.

Durch Verschieben der Manschette 7 in Richtung des hinteren Endes (-x-Richtung) des Verbinders 1 wirkt der Bügel 9 eine Kraft auf den Verri egel u ngsarm 4 aus und zieht diesen nach unten in Richtung des Grundkörpers 2. Die Verriegelungsschultern 5 werden dadurch ebenfalls nach unten verschoben, so dass sie entriegelt werden und den Verbinder 1 freigeben. Die auf die Manschette 1 ausgeübten Kräfte dienen gleichzeitig zur Entnahme des Verbinders 1 aus einer Buchse.

Beide Verbinder 1 weisen im Bereich der Manschetten 7 Kopplungsmittel in Form von vorstehenden Elemente 12 auf, die-wie in **Figur 2** dargestellt - in entsprechend ausgestaltete Vertiefungen 13 eines benachbarten Verbinders 1 eingreifen können. Die vorstehenden Elemente 12 und die Vertiefungen 13 dienen zum Wirkverbinden von zwei Verbindern 1 mit-einander. Sie verhindern gleichzeitig ein ungewolltes relatives Verdrehen oder Verschieben der Verbinder 1. Die Verbinderklammer 3 weist in der gezeigten Ausführungsform einen im Wesentlichen C-förmigen Querschnitt auf, der die Verbinder 1 auf drei Seiten umgibt. Andere ein oder mehrteilige Ausgestaltungen sind möglich. Die Verbinderklammer 3 kann - wie in **Figur 3** dargestellt - in der gezeigten Ausführungsform von hinten über die Manschetten 7 der beiden Verbinder 1 geschnappt werden, so dass diese fest miteinander und der Verbinderklammer 3 verbunden sind. Die Wirkverbindung wird in gezeigten Ausführungsform durch entsprechende Schnappverbindungsmittel in Form von vorstehenden Bementen 12 und korrespondierend ausgebildeten Ausnehmungen 14.

In dem die Verbinderklammer 3, wie in Figur 4 schematisch angedeutet (Pfeil p1) in Richtung des hinteren Endes des Verbinders 1 gezogen wird (vgl. **Figur 4****),** werden die Bügel 9 gestreckt und damit die mit diesen Wirkverbundenen Verriegelungsarme 4 zusammen mit den Verriegelungsschultern 5 in Richtung des Grundkörpers 2 gezogen (Pfeil p2).

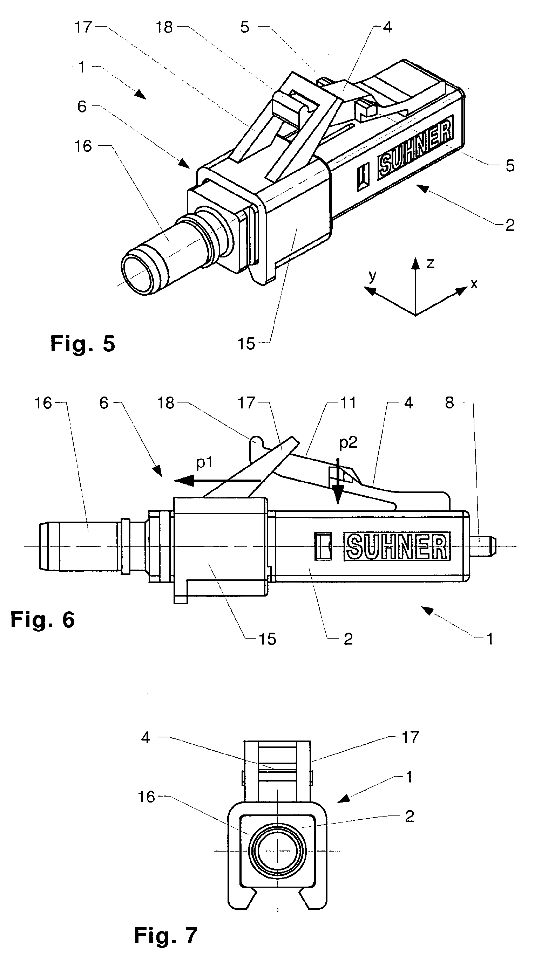

**Figur 5** zeigt einen Steckverbinder 1 in einer Ansicht von schräg hinten und oben. **Figur 6** zeigt den Verbinder 1 gemäss Figur 4 in einer Seitenansicht. **Figur 7** zeigt den Verbinder in einer Ansicht von hinten.

Der Steckverbinder 1 weist einen Gundkörper 2, einen Verriegelungsarm 4 und ein Entriege-lungselement 6 auf. Am hinteren Ende ist ein Crimphals 16 zu erkennen der zum Anschliessen eine optischen Kabels (nicht näher dargestellt) dient.

Der Verriegelungsarm 4 ist am vorderen Ende des Grundkörpers 2 schräg nach hinten oben abstehend angeordnet und elastisch federnd ausgeführt. Der Verriegelungsarm 4 weist beidseits eine Verriegelungsschulter 5 auf, die zur Verriegelung des Steckverbinders 1 in einer korrespondierend ausgebildeten Buchse bekannter Art und Weise dient.

Das Entriegelungselement 6 weist in der gezeigten Ausführungsform ein auf dem Grundkörper 2 verschiebbares, manschettenartiges Verschiebelement 15 mit einem daran angeformten hier in Richtung des Verriegelungsarmes 4 schrägt nach vorne vorstehenden Bügel 17 auf, welcher den Verriegelungsarm 4 im Bereich des hinteren Endes umgibt. Durch das Zusammenwirken mit dem im hinteren Bereich rampenartig (Rampe 11) schräg nach oben verlaufenden Verriegelungsarm 4 wird dieser beim Zurückziehen der Manschette 15 des Entriegelungselementes 5 (Pfeil p1) durch den Bügel 17 in einem definierten Mass nach unten gedrückt. Indem dadurch die Verriegelungsschultern nach unten bewegt werden (Pfeil p2) erfolgt eine Entriegelung des Verbinders In der gezeigten Ausführungsform verhindert ein mechanischer Anschlag 18 ein Abrutschen des Bügels 17 vom Verriegelungsarm 4. Gleichzeitig kann der Anschlag 18 dazu dienen, für die Entnahme des Verbinders notwendigen Kräfte auf den Verriegelungsarm 4 zu übertragen.

Der Bügel 17 ist in der gezeigten Ausführungsform derart ausgestaltet, dass das hintere Ende 18 des Verriegelungsarms 4 von aussen bedienbar bleibt und bei Bedarf von Hand niedergedrückt werden kann.

Wie in **Figur 7** zu erkennen ist, ist das Entriegelungselement 6 in der gezeigten Ausführungsform als Schnappelement ausgestaltet, welches nachträglich auf den Verbinder 1 aufgeschnappt werden kann.

Zu diesem Zweck ist die Manschette (Verschiebeelement) 15 im unteren Bereich offen aus-gestaltet. Der Querschnitt ist im Wesentlichen C-förmig ausgestaltet. Andere Ausgestaltungen sind möglich. Die Manschette kann aber auch, z.B. durch eine über ein Scharnier angeformte Klappe oder ein Gegenelement geschlossen ausgestaltet sein. Der Bügel 17 kann so ausgestaltet sein, dass er den Verriegelungsarm 4 in einer vorderen Position aktiv nach oben drückt und damit gegen ungewolltes Entriegeln sichert. Bei Bedarf kann der Bügel 17 derart ausgestaltet sein, dass er in einer hinteren Position einrastet und damit den Verriegelungsarm 4 in einer entriegelten Position festhält.

Bei Bedarf kann das Entriegelungselement 6 so ausgestaltet sein, dass es zur Aufnahme und Koordination von mehr als einem Verbinder geeignet ist. In diesem Fall ist das Verschiebeelement 15 so ausgestaltet, dass mehr als ein Grundköper 1 damit wirkverbunden werden können. In einer Ausführungsform weist der Querschnitt eine doppel-C-förmige Ausgestaltung auf, bei dem die beiden im Wesentlichen C-förmigen Querschnitt Rücken an Rücken oder seitlich aneinander liegen. Andere Ausgestaltungen sind möglich. Das Entriegelungselement dient in diesem Fall zur Halterung und zur Koordination der Bewegungen der beiden Verbinder. Das Entriegelungselement übernimmt in diesem Fall die Funktion der Verbinderklammer 3 des Ausführungsbeispiels aus den Figuren 1 bis4.

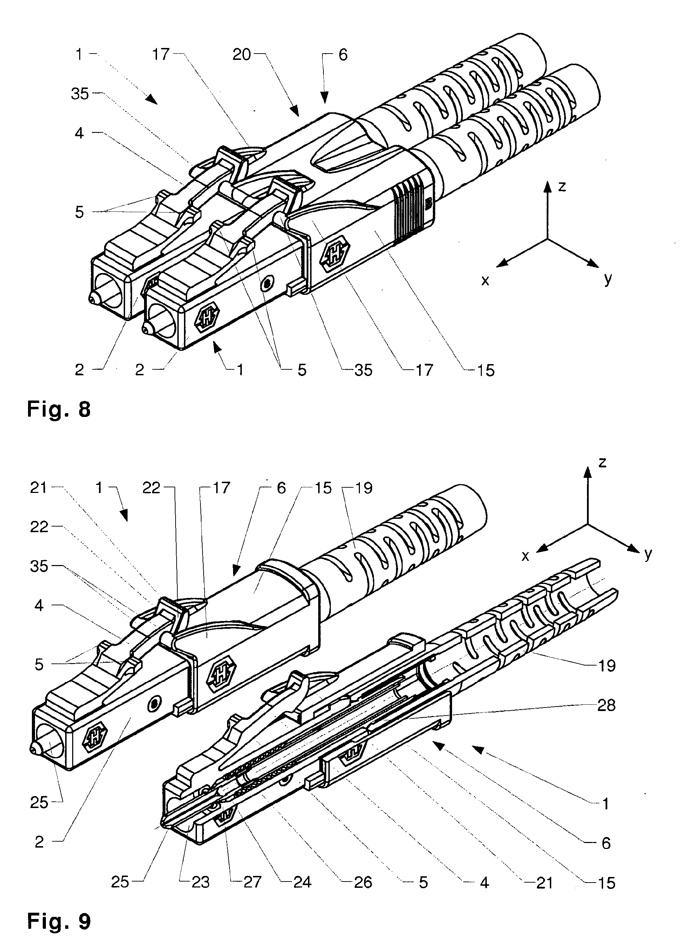

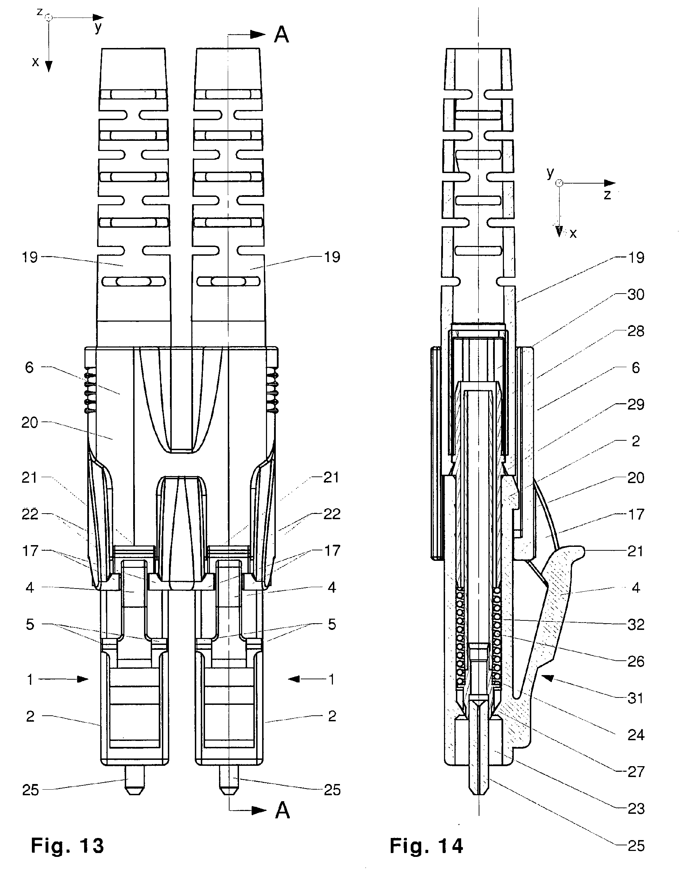

**Figur 8** zeigt zwei Verbinder 1 einer dritten und erfindungsgemässen Ausführungsform in einer perspektivischen Darstellung von schräg oben. **Figur 13** zeigt die Verbinder 1 gemäss Figur 8 in einer Draufsicht. Figur 14 zeigt einen Schnitt durch die Anordnung von Figur 13 entlang der Schnittlinie AA. Die in den Figuren 8 und 13 dargestellten beiden Verbinder 1 sind mittels einer Verbinderklammer 20, die gleichzeitig als Entriegelungselement 6 dient, miteinander wirkverbunden.

**Figur 9** zeigt zwei Verbinder 1 gemäss Figur 8 seitlich nebeneinander. Der vom Betrachter aus gesehen vordere Verbinder 1 ist bereichsweise geschnitten dargestellt, damit der innere Aufbau besser ersichtlich wird. Im Unterschied zur Anordnung gemäss Figur 8 weist jeder Verbinder 1 ein eigenes Entriegelungselement 6 auf. Bei Bedarf können die Entriegelungselemente Wirverbindungsmittel aufweisen (nicht weiter dargestellt), mittels denen zwei Entriegelungselemente zusätzlich miteinander wirkverbunden werden können.

Die Steckverbinder 1 weisen je einen Gundkörper 2, einen Verriegelungsarm 4 und ein Entriegelungselement 6 auf. Der Verriegelungsarm 4 ist am vorderen Ende des Grundkörpers 2 schräg nach hinten oben abstehend angeordnet und in der gezeigten Ausführungsform elastisch federnd ausgebildet (andere Ausgestaltungen sind möglich). Der Verriegelungsarm 4 weist beidseits eine Verriegelungsschulter 5 auf, die zur Verriegelung des Steckverbinders 1 in einer korrespondierend ausgebildeten Buchse bekannter Art und Weise dient. Das Entriegelungselement 6 weist ein gegenüber dem Gundkörper 2 verschiebbares, manschettenartiges Verschiebelement 15 mit einem daran angeformten hier in Richtung des Verriegelungsarmes 4 schrägt nach vorne vorstehenden Bügel 17 auf. Am hinteren Ende weist der Verriegelungsarm 4 eine Verdickung 21 auf, die hier auf jeder Seite des Verriegelungsarmes 4 eine Rampe 22 bildet, welche vom Bügel 17 umgriffen wird. Der Bügel weist dazu pro Seite einen nach innen vorstehenden Zapfen 35 auf. Zum Entriegeln wird das Entriegelungselement 6 auf dem Gundkörper 2, z.B. mit Daumen und Zeigefinger, nach hinten (-x-Richtung) gezogen. Dadurch tritt der Bügel 17, respektive die Zapfen 35 mit den Rampen 22 in wirkverbindung und drücken dadurch den hinteren Teil des Verriegelungsarmes 4 aufgrund der Neigung der Rampe 22 nach unten gegen den Grundköper 2. Dadurch werden die Verriegelungsschultern 5 ebenfalls nach unten gezogen, was zu einer Entriegelung des Verbinders 1 führt. Durch die gewählte Anordnung und Ausgestaltung ist eine niedere Bauform mit präziser Führung möglich.

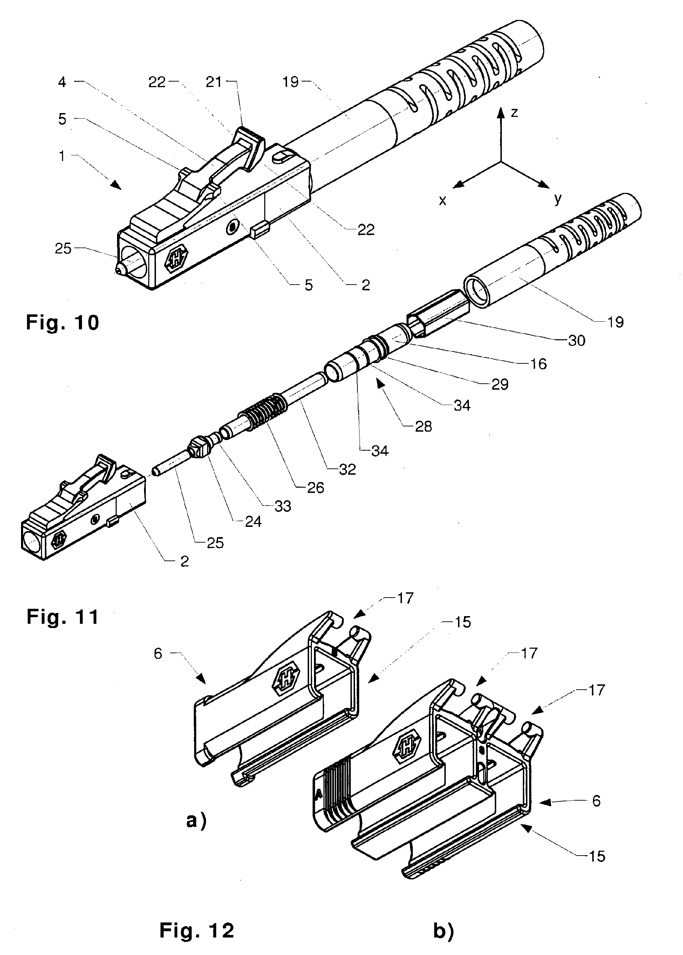

In den **Figuren 9** (vorderer Verbinder), sowie **Figur 14** (Schnittdarstellung entlang Schnittlinie AA gemäss Figur 13, sowie der Explosionsdarstellung gemäss **Figur 11** ist das Innenleben des Verbinders ersichtlich. In **Figur 10** ist der Verbinder gemäss Figur 11 zusammengebaut dargestellt. Der Verbinder gemäss Figur 10 kann bei Bedarf auch ohne Entriegelungselement 6 verwendet werden. In diesem Fall ist auch die Verdickung 21 am Ende des Verriegelungsarmes 4 nicht zwingend erforderl i ch.

Wie in den **Figuren 9** und **14** zu erkennen ist, weist der Grundkörper 2 in Längsrichtung eine durchgehende Öffnung 23 auf. In diese wird vom hinteren Ende her ein Ferrulenhalter 24 mit einer Ferrule 25 eingeschoben, die zur Aufnahme einer nicht weiter dargestellten Glasfaser dienen. Der Ferrulenhalter 24 wird durch eine vorgespannte Feder 26 gegen eine im Innern der Öffnung 23 ausgebildete Schulter 27 gepresst. Der Ferrulenhalter weist einen polygonalen Querschnitt auf, der mit einer korrespondierend ausgebildeten Vertiefung der Schulter 27 formschlüssig zusammenwirkt. Durch diese Ausgestaltung kann der Ferrulenhalter zur Feineinstellung um seine Achse positioniert werden. Gegen hinten stützt sich die Feder 26 auf einer in den Gundkörper 2 eingepressten Einpresshülse 28 ab, die in der gezeigten Ausführungsform über den Gundkörper 2 vorsteht und gleichzeitig als Crimphals dient. Ähnliche Verbinderkonstruktionen sind von anderen Verbindern aus dem Stand der Technik bekannt (vgl. z.B. US5,984,531), allerdings gehören diese Verbinder einer anderen Gattung an und bauen wesentlich grösser, so dass sie eine wesentlich grössere Wandstärke im Bereich der Hülse aufweisen. Die Packungrdichte ist entsprechend schlechter im Vergleich zum hier offenbarten erfindungsgemässen Verbinder. Vergleichbare Konstruktionen wurden bis heute bei der hier diskutierten Verbinderklasse von LC-Verbindern als nicht möglich erachtet und waren daher auch nicht bekannt. Durch die spezielle Ausgestaltung und Abstimmung der Einpresshülse 28 werden die erforderlichen Auszugswerte bei Kabelzug in Längsrichtung des Verbinders und quer dazu erreicht.

Wie in den **Figuren 11** und **13** besonders gut zu erkennen ist, weist die Einpresshülse 28 einen Anschlagrand 29 auf, der die Einpresstiefe der Einpresshülse 28 in die Öffnung 23 des Grundkörpers 2 bestimmt. Im hinteren Bereich weist die Einpresshülse einen Crimphals 16 auf. Bei der Montage des Verbinders 1 an einem Kabel (nicht weiter dargestellt), wird der Kabelmantel auf den Crimphals 16 aufgeschoben und mit einer verpressten Crimphülse 30 fixiert. Ein für die eigentliche Funktion des Verbinders 1 nicht zwingend notwendiger Knickschutz 19 kann als Abschluss auf die Crimphülse 30 aufgeschoben werden.

In der Schnittdarstellung gemäss **Figur 13** ist der Aufbau und das Innenleben des Verbinders 1 in montiertem Zustand zu erkennen. Der Verriegelungsarm 4 weist im Bereich seiner Anbindung am Grundköper 2 eine Dünnstelle 31 auf, welche das elastische Federverhalten beim Entriegeln verbessert.

Der Ferrulenhalter 24 geht am hinteren Ende in ein flexibel ausgestaltetes Fbhr 32 über, welches in montiertem Zustand durch die Feder 26 hindurch bis in die Einpresshülse 28 hineinragt. Durch diese Ausgestaltung wird die erforderliche seitliche Beweglichkeit des Ferrulenhalters 24 im Innern des Grundkörpers 2 nicht behindert. Dennoch wird das Kabel gegenüber der Feder 26 geschützt. Des Weiteren dient das flexible Fbhr 29 bei Bedarf als Montagehilfe. En weiterer Vortei besteht darin, dass beim Verkleben des Verbinders verhindert wird, dass Klebstoff mit der Feder 26 und der Einpresshülse 28 ungewollt in Verbindung kommt.

Wie in **Figur 11** zu erkennen ist, weist der Ferrulenhalter 24 am hinteren Ende einen Anschlussbereich 33 auf, auf den das Fbhr 32 aufgeschoben und verklebt werden kann. Andere Befestigungsarten sind möglich. Die Einpresshülse 28 weist in der gezeigten Ausführungsform zwei zueinander beabstandete radial vorstehende Zähne 34, die sich beim Einpressen in die Öffnung 23 im Material des Grundkörpers 2 verzahnen. Die Zähne 34 können unterschiedliche Durchmesser aufweisen, was die Wirkung erhöhen kann. Die Länge des aktiven Bereichs (Bereich der eingepresst wird) der Einpresshülse 28 entspricht dem zwei-bis dreifachen des Durchmessers Im Unterschied zum Sand der Technik sind beim hier offenbarten Verbinder keine Längsverlaufenden Entlastungschlitze im Grundkörper 2 erforderlich. Infolge der Relaxation des Materials werden die Zähne auszugsicher im Material des Grundkörpers ei ngebettet.

In **Figur 14** sind ein einfaches (a) und das doppeltes (b) Entriegelungselement 6 in einer perspektivischen Darstellung von schräg unten dargestellt. Beide Entriegelungselemente 6 sind als Schnappelement ausgestaltet, welche auf einen (a) oder zwei (b) Verbinder 1 gemäss Figur 10 aufgeschnappt werden können. Zu diesem Zweck ist die Manschette (Verschiebeelement) 15 im unteren Bereich offen ausgestaltet. Der Querschnitt ist im Wesentlichen C-förmig, resp. Doppel-C-förmig ausgestaltet. Andere Ausgestaltungen sind möglich. Die Manschette kann aber auch, z.B. durch eine über ein Scharnier angeformte Klappe oder ein Gegenelement geschlossen ausgestaltet sein. Der Bügel 17 kann so ausgestaltet sein, dasser den Verriegelungsarm 4 in einer vorderen Position aktiv nach oben drückt und damit gegen ungewolltes Entriegeln sichert. Bei Bedarf kann der Bügel 17 derart ausgestaltet sein, dass er in einer hinteren Position einrastet und damit den Verriegelungsarm 4 in einer entriegelten Position festhält.

In **Figur 12 (b)** ist das Entriegelungselement 6 so ausgestaltet sein, dass es zur Aufnahme und Koordination von mehr als einem Verbinder geeignet ist. In diesem Fall ist das Verschiebeelement 15 so ausgestaltet, dass mehr als ein Grundköper 1 damit wirkverbunden werden können. In einer Ausführungsform weist der Querschnitt eine doppel-C-förmige Ausgestaltung auf, bei dem die beiden im Wesentlichen C-förmigen Querschnitt Rücken an Rücken oder seitlich aneinander liegen. Andere Ausgestaltungen sind möglich. Das Entriegelungselement dient in diesem Fall zur Halterung und zur Koordination der Bewegungen der beiden Verbinder.

Die Verbinder 1 gemässden Figuren 8 bis 14 ermöglichen einen besonders niederen Aufbau. Durch die offene (nicht durchgehende) Ausgestaltung des Bügels 17 kann zudem der Verriegelungsbügel 4 von Hand oder mit einem Werkzeug bedient werden.

| | | | |
|---|---|---|---|
| **BEZUGSZEICHENLISTE** | | 27 | Schulter |
| | | 28 | Einpresshülse |
| 1 | Verbinder | 29 | Anschlagrand |
| 2 | Grundkörper | 30 | Crimphülse |
| 3 | Verbinderklammer | 31 | Dünnstelle |
| 4 | Verriegelungsarm | 32 | Fbhr |
| 5 | Verriegelungsschulter | 33 | Anschlussbereich |
| 6 | Entriegelungselement | 34 | Zahn |
| 7 | Verschiebeelement (Manschette) | 35 | Zapfen |
| 8 | Ferrule | | |
| 9 | Bügel | | |
| 10 | Gelenk | | |
| 11 | Rampe | | |
| 12 | Vorstehendes Element | | |
| 13 | Vertiefung | | |
| 14 | Ausnehmung | | |
| 15 | Verschiebelement | | |
| 16 | Crimphals | | |
| 17 | Bügel | | |
| 18 | Mechanischer Anschlag | | |
| 19 | Knickschutz | | |
| 20 | Verbinderklammer | | |
| 21 | Verdickung | | |
| 22 | Rampe | | |
| 23 | Durchgehende Öffnung | | |
| 24 | Ferrulenhalter | | |
| 25 | Ferrule | | |
| 26 | Feder | | |

## Patentansprüche

1. Optischer Steckverbinder (1) mit einem Grundkörper (2) und einem am vorderen Ende des Grundkörpers (2) angeformten, nach hinten schräg abstehenden, gelenkigen Verriegelungsarm (4) und einem Entriegelungselement (6) das mit dem Verriegelungsarm (4) wirkverbunden und gegenüber dem Grundkörper (2) derart in eine Entriegelungsrichtung (-x) verschiebbar ist, dass der Verriegelungsarm (4) entriegelt wird, wobei das Entriegelungselement (6) ein in Entriegelungsrichtung verschiebbares, mit dem Grundkörper (2) wirkverbundenes Verschiebeelement (15) aufweist, wobei das Verschiebelement (15) und der Verriegelungsarm (4) über einen Bügel (17) wirkverbunden sind,
wobei der Bügel (17) mit dem Verriegelungsarm (4) über eine Rampe (22) zusammenwirkt, **dadurch gekennzeichnet, dass**
der Verriegelungsarm (22) eine Verdickung aufweist, die auf beiden Seiten des Verriegelungsarms (4) die Rampe (22) ausbildet, und dass
das Entriegelungselement (6) einen offenen, nicht durchgehend ausgestalteten Bügel (17) aufweist, wobei der Bügel pro Seite einen nach innen vorstehenden Zapfen (35) aufweist, der beim Entriegeln mit der Rampe (22) zusammenwirkt.

2. Optischer Steckverbinder (1) gemäss Anspruch 1, **dadurch gekennzeichnet, dass** der Bügel (17) und das Verschiebeelement (15) einteilig ausgebildet sind.

3. Optischer Steckverbinder (1) gemäss einem der vorangehenden Ansprüche, **dadurch gekennzeichnet, dass** das Verschiebeelement (15) lösbar mit dem Grundkörper (2) wirkverbunden ist.

4. Optischer Steckverbinder (1) gemäss einem der vorangehenden Ansprüche, **dadurch gekennzeichnet, dass** das Verschiebeelement (15) einen C- oder U-förmigen Querschnitt aufweist, welcher den Grundkörper (2) teilweise umschliesst oder auf diesen aufgeschnappt ist, oder einen ringförmigen Querschnitt aufweist, welcher den Grundkörper (2) ganz umgibt.

5. Optischer Steckverbinder (1) gemäss einem der vorangehenden Ansprüche, **dadurch gekennzeichnet, dass** das Verschiebeelement (15) und/oder der Grundkörper (2) Mittel zur Begrenzung der Verschiebung in und/oder entgegen der Entriegelungsrichtung aufweisen.

6. Optischer Steckverbinder (1) gemäss einem der vorangehenden Ansprüche, **dadurch gekennzeichnet, dass** der Steckverbinder (1) Kopplungsmittel (12, 13) zum seitlichen Wirkverbinden mit einem weiteren Steckverbinder (1) aufweist.

7. Optischer Steckverbinder (1) gemäss Anspruch 6, **dadurch gekennzeichnet, dass** die Kopplungsmittel (12, 13) auf dem Grundkörper (2) und/oder dem Verschiebeelement (15) angeordnet sind.

8. Optischer Steckverbinder (1) gemäss Anspruch 6 oder 7, **dadurch gekennzeichnet, dass** die Kopplungsmittel (12, 13) aus vorstehenden Zapfen (12) und mit ihnen korrespondierenden Vertiefungen (13) bestehen, die ein gegenseitiges Verdrehen der Steckverbinder (1) verhindern.

9. Optischer Steckverbinder (1) gemäss Patentanspruch 1, **dadurch gekennzeichnet, dass** der Grundkörper (2) eine durchgehende Öffnung (23) aufweist, in deren hinteres Endes eine Einpresshülse (28) eingepresst ist.

10. Optischer Steckverbinder (1) gemäss Patentanspruch **9**, **dadurch gekennzeichnet, dass** die Einpresshülse zwei konzentrisch angeordnete umlaufende Zähne aufweist.

11. Optischer Steckverbinder (1) gemäss Patentanspruch 1, **dadurch gekennzeichnet, dass** der Bügel (17) derart offen ausgestaltet ist, dass der Verriegelungsarm (4) von Hand oder mit einem Werkzeug bedient werden kann.

## Claims

1. An optical connector (1) having a base body (2) and an articulated locking arm (4) that is moulded onto the front end of the base body (2) and protrudes slanting backwards, and an unlocking member (6) that is operatively connected to the locking arm (4) and can be displaced relative to the base body (2) in an unlocking direction (-x) in such a way that the locking arm (4) is unlocked, wherein the unlocking member (6) has a sliding element (15) that can be displaced in the unlocking direction and is operatively connected to the base body (2), wherein the sliding element (15) and the locking arm (4) are operatively connected via a yoke (17),
wherein the yoke (17) cooperates with the locking arm (4) via a ramp (22), **characterised in that** the locking arm (22) has a thickening that forms the ramp (22) on both sides of the locking arm (4), and **in that** the unlocking member (6) has an open yoke (17) that is formed to be non-continuous, wherein the yoke has, on each side, an inwardly protruding pin (35) that during unlocking cooperates with the ramp (22).

2. The optical connector (1) as claimed in claim 1, **characterised in that** the yoke (17) and the sliding element (15) are formed in one piece.

3. The optical connector (1) as claimed in any one of the preceding claims, **characterised in that** the sliding element (15) is operatively connected to the base body (2) in a releasable manner.

4. The optical connector (1) as claimed in any one of the preceding claims, **characterised in that** the sliding element (15) has a C- or U-shaped cross section that partially encloses or is snapped onto the base body (2) or has an annular cross section that completely encloses the base body (2).

5. The optical connector (1) as claimed in any one of the preceding claims, **characterised in that** the sliding element (15) and/or the base body (2) have means for limiting the displacement in and/or opposite to the unlocking direction.

6. The optical connector (1) as claimed in any one of the preceding claims, **characterised in that** the connector (1) has coupling means (12, 13) for lateral operative connection with a further connector (1).

7. The optical connector (1) as claimed in claim 6, **characterised in that** the coupling means (12, 13) are arranged on the base body (2) and/or the sliding element (15).

8. The optical connector (1) as claimed in claim 6 or 7, **characterised in that** the coupling means (12, 13) are composed of protruding pins (12) and recesses (13) corresponding with them, that prevent a mutual twisting of the connectors (1).

9. The optical connector (1) as claimed in patent claim 1, **characterised in that** the base body (2) has a through-opening (23), into the rear end of which a press-fit sleeve (28) is press fit.

10. The optical connector (1) as claimed in patent claim 9, **characterised in that** the press-fit sleeve has two concentrically arranged circumferential teeth.

11. The optical connector (1) as claimed in patent claim 1, **characterised in that** the yoke (17) is designed to be open in such a way that the locking arm (4) can be operated by hand or using a tool.

## Revendications

1. Connecteur optique (1) comprenant un corps de base (2) et un bras de verrouillage (4) articulé, formé à l'extrémité avant du corps de base (2) et saillant obliquement vers l'arrière, et un élément de déverrouillage (6) qui est fonctionnellement relié au bras de verrouillage (4) et qui est apte à coulisser par rapport au corps de base (2) dans un sens de déverrouillage (-x) de manière à déverrouiller le bras de verrouillage (4), l'élément de déverrouillage (6) comportant un élément coulissant (15) apte à coulisser dans le sens de déverrouillage et relié fonctionnellement au corps de base (2), l'élément coulissant (15) et le bras de verrouillage (4) étant reliés fonctionnellement par un étrier (17),
l'étrier (17) coopérant avec le bras de verrouillage (4) par l'intermédiaire d'une rampe (22), **caractérisé en ce que** le bras de verrouillage (22) comporte un épaississement qui forme la rampe (22) des deux côtés du bras de verrouillage (4), et **en ce que** l'élément de déverrouillage (6) comporte une étrier (17) ouvert et configuré de façon non-continue, l'étrier comportant de chaque côté une broche (35) qui fait saillie vers l'intérieur et qui coopère avec la rampe (22) lors du déverrouillage.

2. Connecteur optique (1) selon la revendication 1, **caractérisé en ce que** l'étrier (17) et l'élément coulissant (15) sont formés d'une seule pièce.

3. Connecteur optique (1) selon l'une des revendications précédentes, **caractérisé en ce que** l'élément coulissant (15) est relié fonctionnellement au corps de base (2) de façon amovible.

4. Connecteur optique (1) selon l'une des revendications précédentes, **caractérisé en ce que** l'élément coulissant (15) a une section transversale en forme de C ou de U qui entoure partiellement le corps de base (2) ou qui est encliqueté sur celui-ci ou a une section transversale annulaire qui entoure complètement le corps de base (2).

5. Connecteur optique (1) selon l'une des revendications précédentes, **caractérisé en ce que** l'élément coulissant (15) et/ou le corps de base (2) comportent des moyens servant à limiter le coulissement dans le sens du déverrouillage et/ou dans le sens opposé à celui-ci.

6. Connecteur optique (1) selon l'une des revendications précédentes, **caractérisé en ce que** le connecteur (1) comporte des moyens d'accouplement (12, 13) servant à établir une liaison latérale fonctionnellement avec un autre connecteur (1).

7. Connecteur optique (1) selon la revendication 6, **caractérisé en ce que** les moyens d'accouplement (12, 13) sont disposés sur le corps de base (2) et/ou sur l'élément coulissant (15).

8. Connecteur optique (1) selon la revendication 6 ou 7, **caractérisé en ce que** les moyens d'accouplement (12, 13) sont constitués de broches saillantes (12) et d'évidements correspondants (13) qui empêchent les connecteurs (1) de tourner l'un par rapport à l'autre.

9. Connecteur optique (1) selon la revendication 1, **caractérisé en ce que** le corps de base (2) comporte un orifice traversant (23) dans l'extrémité arrière duquel est inséré un manchon insérable (28).

10. Connecteur optique (1) selon la revendication 9, **caractérisé en ce que** le manchon insérable comporte deux dents périphériques disposées concentriquement.

11. Connecteur optique (1) selon la revendication 1, **caractérisé en ce que** l'étrier (17) présente une configuration ouverte de telle que le bras de verrouillage (4) peut être manipulé à la main ou avec un outil.
